Europäisches Patentamt

European Patent Office

Office européen des brevets

(19)

(11) Publication number: 0 469 366 A2

# EUROPEAN PATENT APPLICATION

(12)

(21) Application number: 91111681.2

(22) Date of filing: 12.07.91

(51) Int. Cl.⁵: **F16F 15/12**, F16F 1/36, F16D 13/68

(30) Priority: 30.07.90 US 560540

(43) Date of publication of application:
05.02.92 Bulletin 92/06

(84) Designated Contracting States:
DE FR GB IT

(71) Applicant: EATON CORPORATION
Eaton Center
Cleveland Ohio 44114(US)

(72) Inventor: Godlew, David Paul
31944 Carlelder
Birmingham, Michigan 48009(US)

Inventor: Krzysik, Don Joseph
580 Morel Court
Wixon, Michigan 48393(US)
Inventor: Leydet, Michael Gerard
20200 Ten Mile Road
St. Clair Shores, Michigan 48080(US)
Inventor: Stretch, Dale Arden
22739 Cranbrooke
Novi, Michigan 48375(US)

(74) Representative: Wagner, Karl H. et al
WAGNER & GEYER Patentanwälte
Gewuerzmuehlstrasse 5 Postfach 22 14 39
W-8000 München 22(DE)

(54) Torsional vibration damper with composite springs.

(57) A torsional vibration damping mechanism (30) is disclosed in a free standing clutch plate (26) for a vehicle driveline. The mechanism (30) includes composite C-shaped springs (41,42) for attenuating driveline torsionals and transmitting driveline torque, and a viscous damper (48) for controlling the rate of flexing of the springs. The mechanism also includes input and output drives (46,44) for flexing the springs only radially inward. The C-shaped composite springs are formed by removing a minor arc of a closed ring comprising a plurality of layers of reinforcing filaments, or by cutting a composite cylinder into closed rings and removing the minor arc.

FIG 2

EP 0 469 366 A2

**Cross Reference**

This application relates to U.S. patent application serial numbers 560,407 and 560,408, filed 7/30/90 and assigned to the assignee of this application.

**Field of the Invention**

This invention relates to torsional vibration damper mechanisms. More specifically, the invention relates to composite springs for such damper mechanisms and to use of such mechanisms in vehicle drivelines.

**Background of the Invention**

Torsional vibration damping mechanisms have long been used to reduce the adverse effects of torsional vibrations or fluctuating torques in vehicle drivelines. Such torsional vibrations or fluctuating torques, hereinafter referred to as torsionals, emanate primarily from engine power pulses and torque spikes, and from abrupt changes in driveline torque due primarily to rapid engine acceleration/deceleration and transmission ratio changes.

Such mechanisms commonly employ a spring(s) to attenuate torsionals and transmit positive and negative torque between the vehicle engine and wheels, and employ a damper assembly to control the rate of flexing of the springs. Examples of such mechanisms may be seen by reference to U.S. Patents 4,874,074 and 4,690,256; and French patent application 2,611,013. These documents are incorporated herein by reference.

The mechanisms in the U.S. documents each employ a nested pair of spiral wound springs formed of steel; these springs are designed to withstand flexing of forty or more degrees, flex radially inward and outward in response to increasing positive and negative torque, and are symmetrically balanced when paired.

The mechanism in the French Patent document employs a single spiral wound spring formed of a composite material including a plurality of layers of reinforcing filaments bonded together by a plastic material; this spring has an unknown flex design limit, flexes radially inward and outward in response to increasing positive and negative torque, and is not per se symmetrically balanced.

The steel spiral wound springs in the mechanism of the U.S. patent documents have the disadvantage of increasing the inertia of the damping mechanism. The composite spring in the mechanism of the French patent document has the disadvantage of being per se symmetrically unbalanced, and is prone to delamination failure of the reinforcing filaments.

**Summary of the Invention**

An object of the present invention is to provide an improved spring life for a driveline torsional damping mechanism.

Another object of the present invention is to provide such a spring formed of composite materials for reducing inertia of the damper mechanism.

Another object of the present invention is to provide such a composite spring having a shape configured to fit within the limited space available in a driveline torsional vibration damper without adding significant complexity and inertia to damper mechanism components needed to attach the springs.

According to a feature of the invention, a driveline torsional damping mechanism is configured for rotation in one direction. The mechanism comprises resilient means for transmitting positive and negative torque between an input and an output disposed for relative rotation about a common axis and a damper assembly includes first and second relatively rotatable members respectively connected to the input and output for damping torsionals in response to relative rotation of the input and output.

The improvement is characterized by the resilient means being at lest a first spring disposed radially outward of and concentric to the output. The spring has first and second ends. The input and output each include first drive means for transmitting positive torque to and from the spring ends in a direction flexing the spring radially in one direction in response to increasing positive torque, and the input and output each include second drive means for transmitting negative torque to and from the spring ends in a direction flexing the spring radially in the same direction in response to increasing negative torque.

According to a further feature of the above mechanism, the input and output include means for positioning the drive means such that increasing positive and negative torque flex the spring radially inward.

According to a further feature of the above mechanisms, the spring comprises of a plurality of layers of reinforcing filaments bonded together by a plastic material.

According to a further feature of the above mechanism, the resilient means includes at least two C-shaped springs formed of composite material.

**Brief Description of the Drawings**

The torsional vibration damping mechanism of the present invention is shown in the accompanying drawings in which:

Figure 1 is a schematic view of a motor vehicle driveline;

Figure 2 is a detailed, sectional view of the torsional vibration damping mechanism looking along line 2-2 of Figure 3;

Figure 3 is a detailed relief view of a portion of the mechanism looking in the direction of arrow 3 of Figure 2;

Figures 4 and 5 are perspective views of parts in the mechanism;

Figure 6 is a sectional view of a hub assembly looking along line 6-6 of Figure 2.

Figures 7 and 8 are respectively perspective views of a ring and a cylinder of composite material prior to being made into C-shaped springs; and

Figure 9 is an enlarged schematic view of a portion of one of the C-shaped springs illustrating layers of reinforcing filaments protruding from a matrix of plastic material.

## Detailed Description of the Drawings

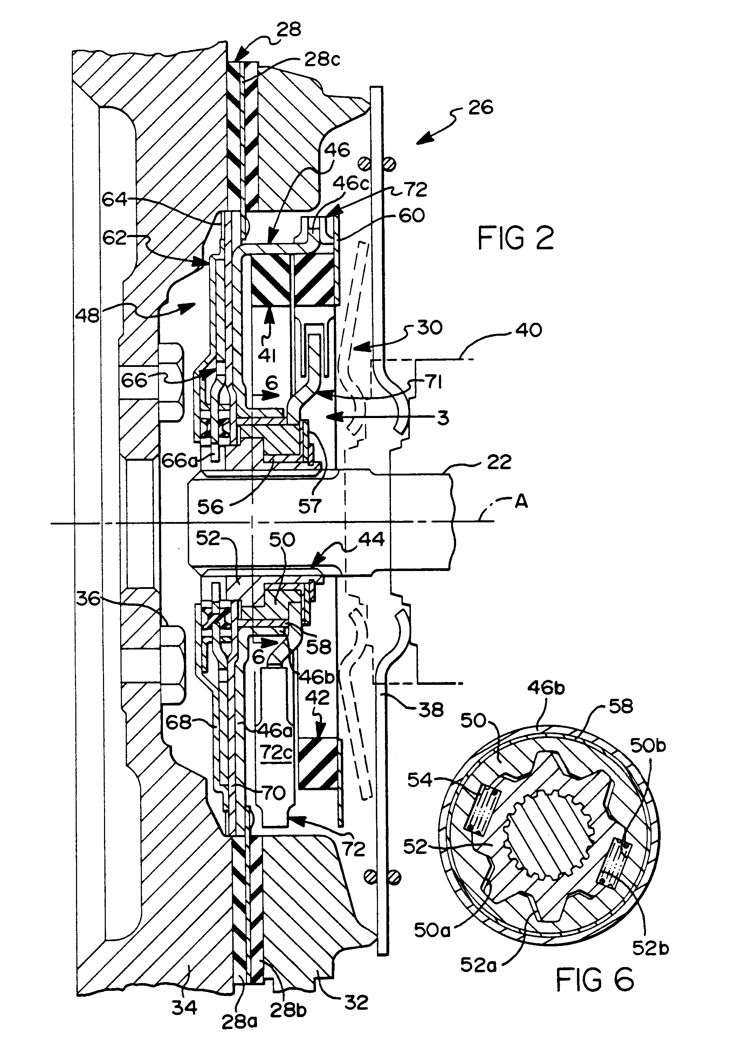

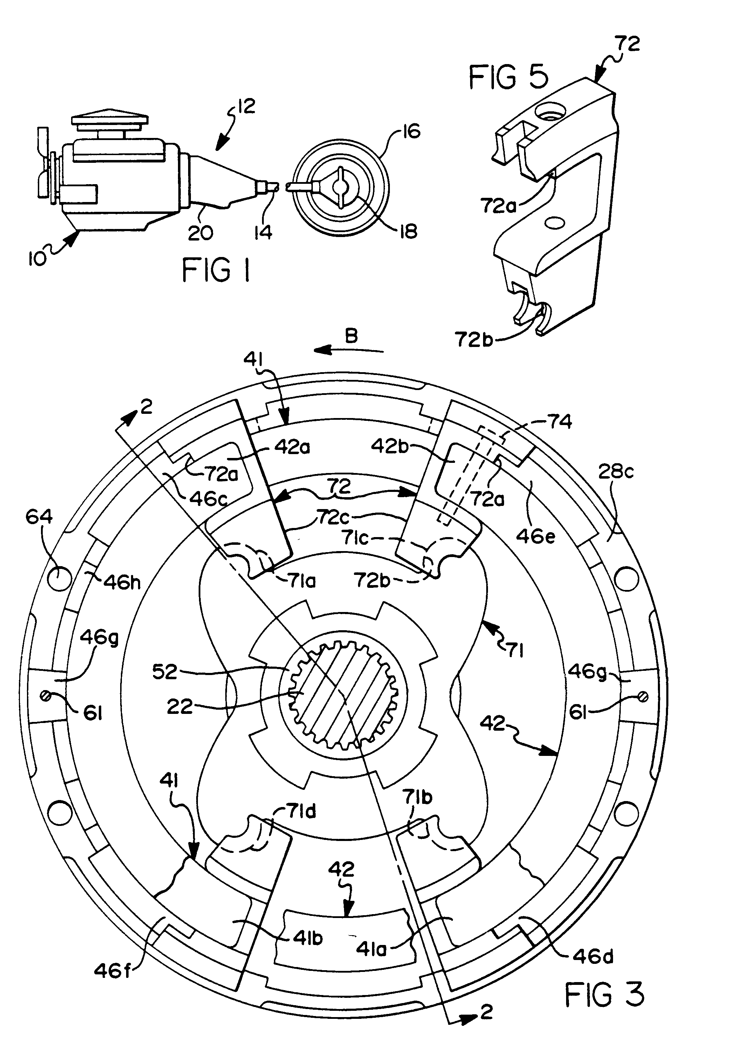

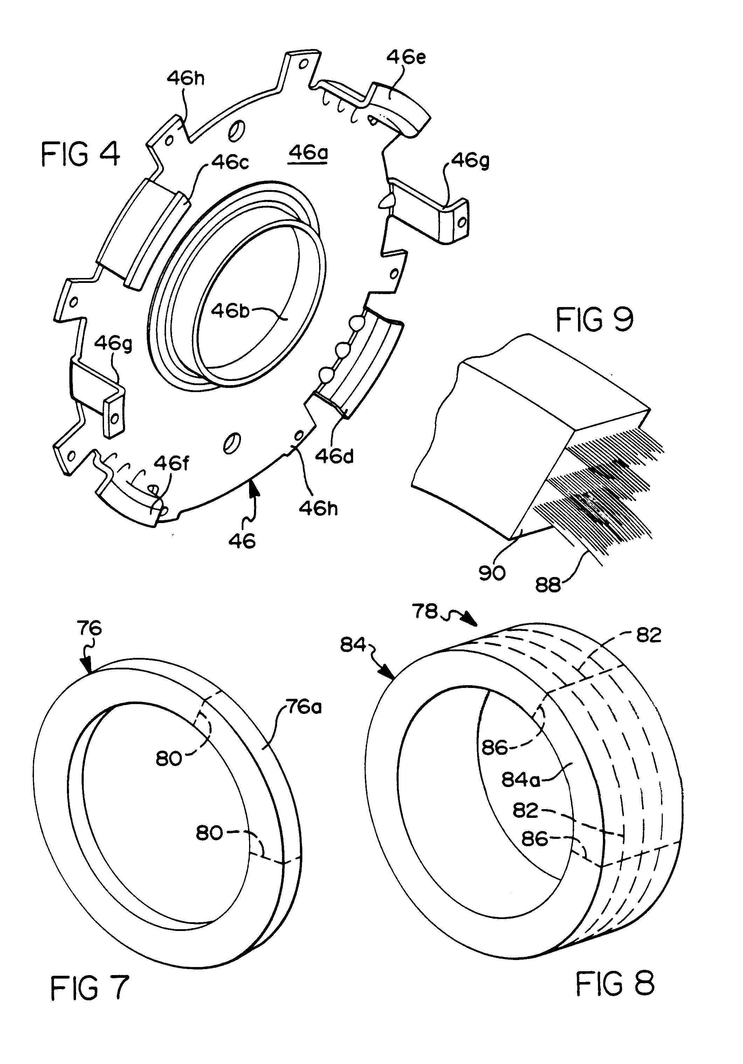

The motor vehicle driveline seen schematically in Figure 1 includes a prime mover 10 and a transmission 12 having an output shaft 14 drivingly connected to a load such as ground engaging wheels 16 via a differential gear assembly 18 for rear and/or front axles of a vehicle. Prime mover 10 is preferably of the internal, periodic combustion type but may be any type of power plant having torque characteristics that are improved by a torsional vibrational damping mechanism. The transmission includes a housing 20 containing a plurality of unshown, constant mesh ratio gears or ratio change mechanism driven by a transmission input shaft or drive 22 partially shown in Figure 2. Well-known ratio change devices or clutches within the transmission are employed to selectively (i.e., manually or automatically) put the transmission into a neutral position wherein the input shaft is not connected to the load or into in-gear positions wherein the input shaft is connected to a load such as wheels 16.

Looking now at Figures 2-6 and primarily at Figures 2 and 3, therein is illustrated a master clutch plate assembly 26 disposed for rotation about the axis A of shaft 22 and in one direction indicated by arrow B in Figure 3 and taken as the direction of positive torque. The clutch plate assembly includes an annular friction ring 28 in driving relation with shaft 22 via a torsional vibration damping mechanism 30 positioned radially between the friction ring and shaft 22. The friction ring includes oppositely facing friction surfaces 28a,28b frictionally connected to an unshown engine output shaft in response to selective axial movement of a pressure plate 32 toward a flywheel 34 secured to an engine output shaft in known manner by partially shown bolts 36. The pressure plate is resiliently pushed into engagement by a diaphragm spring 38 when a schematically illustrated throw-out bearing 40 is in the solid line position and is disengaged when the throw-out bearing is in the phantom line position.

The torsional vibration damping mechanism 30 includes a pair of C-shaped springs 41,42 for attenuating torsionals and transmitting driveline torque, a hub assembly 44, a support member 46, and a viscous damper assembly 48. Damper assemblies other than the viscous shear type disclosed herein may be employed, e.g., the vane damper of previously mentioned U.S. Patent 4,690,256 may be employed.

The hub assembly 44, is similar to the hub assembly in previously mentioned U.S. Patent 4,874,074. The assembly includes outer and inner hub members 50,52 and, as seen in Figure 6, two idle rattle springs 54. The hub members and springs collectively define a hub idle rattle assembly. Outer member 50 has a somewhat Z-shaped cross-section with an inner cylindrical surface journaled on an outer cylindrical surface of inner hub member 52 via a cylindrical portion of a bearing 56. Relative axially movement of the hub members is prevented a thrust washer 57 sandwiched between a radially extending portion of bearing 56 and a snap ring secured in a groove of hub member 50. Inner hub member 52 is slidably splined to shaft 22. The idle rattle portion of the assembly has a plurality of internal spline teeth 50a and two diametrically oppositely disposed recesses 50b defined by hub 50, an equal number of external spline teeth 52a loosely received in teeth 50a and two diametrically oppositely disposed recesses 52b registering with recesses 50b, and the springs 54 for opposing the free play between teeth 50a,52a. Springs 54 are designed to provide a force sufficient to resiliently interconnect the hub members when the transmission is in a neutral position, i.e., when shaft 22 is not connected to a load. Hence, springs 54 are of a relatively low rate or stiffness compared to springs 41,42 which are designed to resiliently transmit substantially maximum normal driveline torque. Hub assembly 44 further includes a plate member 71 affixed to and extending radially outward from outer hub member 50. The plate includes first and second pairs of output drive lugs 71a,71b and 71c,71d which react with springs 41,42.

Support member 46, as best seen in Figure 4, includes a radially extending flange portion 46a having an inner sleeve portion 46b journaled via a sleeve bearing 58 on an outer cylindrical surface of outer hub member 50, first and second pairs of input drive lugs 46c,46d and 46e,46f for reacting with springs 41,42 and defined on the free ends of portions extending axially in cantilever fashion from flange portion 46a, a pair of axially extending brackets 46g for securing a flat ring 60 thereto via fastener 61 shown in cross-section in Figure 3, and six radially extending tabs 46h for securing an inner periphery of a flange 28c of the friction ring and an outer periphery of an annular housing assembly 62 of the viscous damper by fasteners 64. Flat ring 60 prevents rightward axial movement of the adjacent C-shaped spring 42. Ring 60 and washer 57 are removed in Figure 3 to show details of the underlying structure.

Viscous damper assembly 48 includes the annular housing assembly 62 and an annular clutch assembly or viscous shear plate assemblies 66. The damper assembly is preferably of the type disclosed in U.S. Patent 4,914,799 which is incorporated herein by reference. Briefly, the damper housing assembly includes axially spaced apart sidewalls 68,70 defining a chamber filled with a viscous liquid. The clutch or shear plate assembly 66 includes a radially inner portion 66a splined to inner hub member 50 and a radially outer portion having oppositely facing clutching surfaces in close axially spaced relation with surfaces defined by sidewalls 68,70. The housing and clutch surfaces are disposed for clutching coaction therebetween via the viscous shear liquid in response to relative rotation of the housing and clutch assembly. Such relative rotation, of course, occurs in response to flexing of springs 41,42,54 and therefore relative rotation of the damping mechanism input and output defined by support member 46 and hub assembly 44.

C-shaped springs 41,42 each include a first end 41a,42a and a second end 41b,42b. In Figure 3, spring 42 is partially broken away on either side of the six o'clock position to show the first and second ends 41a,41b of spring 41. Each spring end has affixed thereto an end bracket 72. The bracket may be secured in any of several known manners, e.g., an elongated fastener 74 such as illustrated by phantom lines in Figure 3. The brackets with respect to their installed positions each include a radially outwardly extending contact 72a and a radially inwardly extending contact 72b. The radially outer contacts 72a of the brackets affixed to the first and second ends of spring 42 are embraced by circumferentially spaced apart lugs 46c,46e of the first and second pairs of input drive lugs, and in the same manner the contacts 72a of the brackets affixed to the first and second ends of spring 41 are embraced by circumferentially spaced apart lugs 46d,46f of the first and second pairs of input drive lungs. Each bracket also includes a radially extending stop surface 72c. When the brackets are installed, the stop surface limit the number of rotational degrees each spring can flex, therein the stop surfaces are forty degrees apart.

The radially inner contacts 72b of the brackets affixed to the first and second ends of spring 42 are embraced by circumferentially spaced apart lugs 71a,71c of the first and second pairs of output drive lugs, and in the same manner the radially inner contacts 72b of the brackets affixed to the first and second ends of spring 41 are embraced by circumferentially spaced apart lugs 71b,71d of the first and second pairs of output drive lugs. Lugs 71a,71c and 71b,71d are axially offset so as to be aligned with the axial center of springs they are in driving relation with.

C-shaped springs 41,42 are preferably formed from individual rings 76, as is illustrated in Figure 7 or, alternatively, from a cylinder 78 as is illustrated in Figure 8. Ring 76 is formed to the desired axial and radial thickness, and then made into a C-shape by cutting along phantom lines 80 to remove a minor arc portion 76a. Cylinder 78 is formed to the desired radial thickness, then cut along phantom lines 82 into rings 84 of desired axial thickness and then made into a C-shape by cutting along phantom lines 86 to remove a minor arc portion 84a.

Figure 9 schematically illustrates an enlarged portion of one of the C-shaped composite springs with layers of reinforcing filaments 88 protruding from a matrix of plastic material 90. The filaments extend in the direction of curvature of the rings or cylinders. The filaments and layers of filaments are substantially closer together than illustrated and comprise more than 50% of the volume of the composite material. The filaments and the plastic may be any of several known materials. For example, the filaments may be formed of glass, aramids, boron, nylon, etc. The plastic may be formed of epoxides, cyante esters, bismaleimides, thermoset polyimides, thermoplastic polyimides, etc. Good results have been obtained with glass fibers bonded together by an epoxy resin marketed by Shell Oil Company as Shell 9405.

A preferred embodiment of the invention has been disposed for illustrative purposes. Many variations and modifications of the preferred embodiment are believed to be within the spirit of the invention. The following claims are intended to cover the inventive portion of the preferred embodiment and variations and modifications within the spirit of the invention.

**Claims**

1. A driveline torsional damping mechanism (30) for rotation in one direction; the mechanism comprising resilient means (41,42) for transmitting positive and negative torque between an input (46) and an output (44) disposed for relative rotation about a common axis (A); a damper (48) includes first and second relatively rotatable means (62,66) respectively connected to the input (46) and output (44) for damping torsionals in response to relative rotation of the input and output; characterized by:

the resilient means including at least a first spring (41) disposed radially outward of and concentric to the output (44), the spring having first and second ends (41a,41b); and

the input (46) and output (44) each including first drive means (46e,71a) for transmitting positive torque to and from the spring ends (41a,41b) in a direction flexing the spring (41) radially in one direction in response to increasing positive torque, the input and output each including second drive means (46c and 71c) for transmitting negative torque to and from the spring ends in a direction flexing the spring radially in the one direction in response to increasing negative torque.

2. The assembly of claim 1, wherein:

the input (46) and output (44) include means for positioning the drive means (46e,71a and 46c,71c) such that the increasing positive and negative torque flexes the spring (41) radially inward.

3. The assembly of claim 1, wherein:

the spring (41) comprises a plurality of layers of reinforcing filaments (88) bonded together by a plastic material (90).

4. The assembly of claim 3, wherein:

the spring (41) is C-shaped and the first and second ends (41a,41b) are circumferentially aligned and spaced apart.

5. The assembly of claim 4, wherein:

the input (46) and output (44) include means for positioning the drive means (46e,71a and 46c,71c) such that the increasing positive and negative torque flexes the spring (41) radially inward.

6. The assembly of claim 5, wherein:

the first and second drive means (46e,46c) of the input (46) respectively include first and second circumferentially spaced apart drive lugs (46e,46c) extending axially in cantilever fashion from a radially extending portion of a support member (46) of the input (46), the support member rotatably supported on the output (44); and

the first and second spring ends (41a,41b)

respectively include first and second radially outwardly extending contacts (72a) circumferentially embraced by the drive lugs (46e,46c).

7. The assembly of claim 6, wherein:

the output (44) includes hub means (44) and first and second circumferentially spaced apart drive lugs (71a,71b) radially disposed between the spring (41) and hub means (44) and defining the first and second output drives (71a,71b); and

the first and second spring ends (41a,41b) respectively including radially inwardly extending contacts (72b) embraced by the drive output drive lugs (71a,71b).

8. A driveline torsional damping assembly (30) for rotation in one direction; the assembly comprising resilient means (41) for transmitting positive and negative torque between an input (46) and an output (44) disposed for relative rotation about a common axis (A); a damper (48) including first and second relatively rotatable means (62,66) respectively connected to the input (46) and output (44) for damping torsionals in response to relative rotation of the input and output (46,44); characterized by:

the resilient means (41) including at least one C-shaped spring (41) disposed radially outward of and concentric to the output (44), the spring comprising a plurality of layers of reinforcing filaments (88) bonded together by a plastic material (90), and the spring (41) having first and second circumferentially spaced apart ends (41a,41b); and

the input (46) and output (44) each including first and second drive (46e,46c,71a,71c) means for respectively transmitting positive and negative torque to and from the spring ends (41a,41b) in directions tending to only decrease the space between the spring ends, the second drive means (46c,71c) of the input (46) and output (44) being in a non-torque transmitting state during positive torque transmission by the first drive means (46e,71a), and the first drive means (46e,71a) being in a non-torque transmission state during negative torque transmission by the second drive means (46c,71c).

9. The assembly of claim 8, wherein:

the first and second drive means (46e,46c) of the input (46) respectively include first and second circumferentially spaced apart drive lugs (46e,46c) extending axially in cantilever fashion from a radially extending portion of a support member (46) of the input (46), the support member (46) rotatably supported on the output (44);

the first and second spring ends (41a,41b) respectively include first and second radially outwardly extending contacts (72a) circumferentially embraced by the drive lugs (46e,46c);

the output (44) includes hub means (44) and first and second circumferentially spaced apart drive lugs (71a,71c) radially disposed between the spring (41) and hub means (44) and defining the first and second output drives (71a,71c); and

the first and second spring ends (41a,41b) respectively including radially inwardly extending contacts (72b) embraced by the drive output drive lugs (71a,71c).

10. A driveline torsional damping (30) assembly for rotation in one direction; the assembly comprising resilient means (41,42) for transmitting positive and negative torque between an input (46) and an output (44) disposed for relative rotation about a common axis (A); a damper (48) including first and second relatively rotatable means (62,66) respectively connected to the input and output (46,44) for damping torsionals in response to relative rotation of the input and output (46,44); characterized by:

the resilient means (41,42) including at least first and second axially adjacent springs (41,42) disposed radially outward of and concentric to the output (44), each spring comprising a plurality of layers of reinforcing filaments (88) bonded together by a plastic material (90), each spring having first and second ends (41a,42a and 41b,42b); and

the input and output (46,44) each including first and second pairs of drive means (46e,46c,46b,46d, and 71a,71c,71b,71d) for respectively transmitting positive and negative torque to and from the spring ends in directions flexing the springs radially inward in response to increasing positive and negative torque.

11. The assembly of claim 10, wherein:

each spring (41,42) is C-shaped with the first and second ends (41a,41b,42a,42b) of each being circumferentially aligned and spaced apart and with the space between the ends of the first spring (41) being substantially diametrically opposite the space between the ends of the second spring (42).

12. The assembly of claim 11, wherein:

the ends of each spring includes a radially outwardly extending contact (72a); and

the first and second pairs (46e,46c and 46f,46d) of input drive means each include a first spring drive lug (46e,46c) circumferentially spaced apart and embracing the contacts (72a) of the first spring (41), and the first and second pairs of input drive means each include a second spring drive lug (46f,46d) circumferentially spaced apart and embracing the contacts (72a) of the second spring (42).

13. The assembly of claim 12, wherein:

the ends (41a,41b,42a,42b) of each spring includes a radially inwardly extending contact (72b); and

the first and second pairs (71a,71c,71b,71d) of output drive means (44) each include a first spring drive lug (71a,71c) circumferentially spaced apart and embracing the inwardly extending contacts (72b) of the first spring (41), and the first and second pairs of output drive means each include a second spring drive lug (71b,71d) circumferentially spaced apart and embracing the inwardly extending contacts (72b) of the second spring (42).

14. The assembly of claim 13, wherein the output (44) includes hub means (44) having a rigid flange member (71) attached thereto and extending radially outward thereof, and the flange member (71) having the output drive lugs (71a,71b,71c,71d) formed on an outer circumferential portion thereof.

15. The assembly of claim 14, wherein:

the input (46) includes a support member (46) including a radially extending flange (46a) rotatably supported on the hub means (44) and having portions (46e,46c,46f,46d) therefrom axially extending in cantilever fashion with a free end of the portion defining the input drive lugs (46e,46c,46f,46d).

16. The assembly of claim 15, wherein:

the hub means (44) includes a first hub member (50) having the rigid flange member (71) secured thereto against relative rotation and a second hub member (52) having the damper second means (66) secured thereto against relative rotation; and

lost motion means (50a,52b) for drivingly interconnecting the hub members (50,52) with limited rotational free play therebetween, low force resilient means (54) for opposing the free play.

17. The assembly of claim 16, wherein the support member flange (46a) is rotatably supported on the first hub member (50).

FIG 2

FIG 6

FIG 5

FIG I

FIG 3

FIG 4

46h

46e

46c

46a

46g

46b

46g

46f

46d

46h

46

FIG 9

90

88

FIG 7

76

76a

80

80

FIG 8

78

84

82

86

84a

82

86

9